# EUROPEAN PATENT APPLICATION

(11) **EP 4 682 072 A1**
(43) Date of publication of application: **21.01.2026**
(21) Application number: 24774717.3
(22) Date of filing: 08.03.2024
(51) Int. Cl.: B65D 25/20, G06Q 30/02

(54) **ACCOMMODATING BODY AND ACCESS RESTRICTION METHOD**

(30) Priority: 17.03.2023 JP 2023043525
(71) Applicant: Suntory Holdings Limited, Osaka-shi, Osaka 530-8203 (JP)
(72) Inventor: HIGO Tatsutoshi, Osaka-shi, Osaka 530-8203 (JP); KOBAYASHI Toshiya, Tokyo 135-8631 (JP); MATSUTAKE Naoto, Tokyo 135-8631 (JP)
(74) Representative: Vossius & Partner Patentanwälte Rechtsanwälte mbB
(86) International application number: PCT/JP2024/008916
(87) International publication number: WO 2024/195578

(57) **Abstract**

An accommodating body 1 to which individual identification information 5 in a management system is attached, the accommodating body 1 including an accommodating portion for accommodating a content, wherein the management system holds accommodating body information individually for accommodating bodies to be managed, the accommodating body information including information for managers accessible only by a manager of the accommodating bodies and general information accessible by all users, and in response to the individual identification information 5 being read by a predetermined information terminal, the individual identification information 5 enables the information terminal to access the accommodating body information about the accommodating body 1 identified by the individual identification information 5, and, in response to this, a range of the accommodating body information permitted to be accessed by the information terminal is limited based on a predetermined condition.

## Description

### Technical Field

The present invention relates to an accommodating body including an accommodating portion for accommodating a content, and an access restriction method in a management system that manages the accommodating body.

### Background Art

A product such as a beverage or a medicine is handled in a state of being accommodated in some sort of accommodating body at places of manufacture, distribution, consumption, and the like. In recent years, various types of means for managing individual products industrially mass-produced have been studied.

For example, JP 2020-527891 A (Patent Literature 1) discloses a beverage container in which a circuit capable of transmitting data is attached to a cap. The beverage container of Patent Literature 1 is configured such that the data can be transmitted only when the beverage container is opened. Note that a technology for providing a container with an electronic device in order to achieve traceability can also be found in JP 2010-30680 A (Patent Literature 2) and WO 2018/158864 A1(Patent Literature 3).

### Citation List

### Patent Literature

Patent Literature 1: JP 2020-527891 A (or WO 2019/014450 A1)
Patent Literature 2: JP 2010-30680 A (or US 2010/0006204 A1)
Patent Literature 3: WO 2018/158864 A1

### Summary of Invention

### Technical Problem

However, providing the accommodating body with the electronic device can increase costs. This is because the electronic device itself is an additional element, and mounting the electronic device at the accommodating body is also an additional operation, as compared with a related-art accommodating body. In addition, when the electronic device is damaged in a process of distributing the accommodating body, there is a case where an expected function cannot be exhibited.

Therefore, it is necessary to realize accommodating bodies that can be individually managed by a simpler method, and an access restriction method in a management system that manages the accommodating bodies.

### Solution to Problem

An accommodating body according to the present invention is an accommodating body to which individual identification information in a management system is attached, the accommodating body including an accommodating portion for accommodating a content, wherein the management system holds accommodating body information individually for accommodating bodies to be managed, the accommodating body information including information for managers accessible only by a manager of the accommodating bodies and general information accessible by all users, and in response to the individual identification information being read by a predetermined information terminal, the individual identification information enables the information terminal to access the accommodating body information about the accommodating body identified by the individual identification information, and, in response to this, a range of the accommodating body information permitted to be accessed by the information terminal is limited based on a predetermined condition.

An access restriction method according to the present invention is an access restriction method for restricting access to accommodating body information in a management system that manages an accommodating body including an accommodating portion for accommodating a content, and that holds the accommodating body information individually for an accommodating body to be managed, the accommodating body information including information for managers accessible only by a manager of the accommodating body and general information accessible by all users, the access restriction method including, in response to individual identification information attached to the accommodating body being read by a predetermined information terminal, causing the information terminal to access the accommodating body information about the accommodating body identified by the individual identification information, and limiting a range of the accommodating body information permitted to be accessed by the information terminal based on a predetermined condition.

According to these configurations, it is possible to identify each individual accommodating body without providing a complicated structure such as an electronic device. In addition, the information for managers used only by the manager and the general information open to the public can be managed using the same accommodating body and system. Thus, information in each stage of manufacture, distribution, consumption, and the like of the content accommodated in the accommodating body can be centrally managed in association with the individual identification information. Further, since the individual identification information serving as a lead to these pieces of information is attached to the accommodating body, access to each piece of information and access restriction are easy.

Preferred aspects of the present invention will be described below. However, the scope of the present invention is not limited by the preferred aspects described below.

As an aspect of the accommodating body according to the present invention, the information for managers preferably includes at least one of information for identifying the content, information for identifying a manufacturing place of the content, information for identifying a raw material of the content, information for identifying a manufacturing condition of the content, information for identifying a quality of the content, and information for identifying a distribution status.

According to this configuration, it is easy to access detailed information in at least a part of the manufacturing stage and the distribution stage of the product filled in the accommodating body.

As an aspect of the accommodating body according to the present invention, the accommodating body information preferably further includes information for specific consumers accessible by a consumer satisfying a specific condition.

According to this configuration, it is possible to provide information targeted for the consumer who satisfies the specific condition.

As an aspect of the accommodating body according to the present invention, the general information preferably includes at least one of information related to a sales promotion campaign, information for identifying the content, information for identifying a manufacturing place of the content, information for identifying a raw material of the content, information for identifying a manufacturing condition of the content, information for identifying a quality of the content, and information for identifying a distribution status.

According to this configuration, it is possible to manage the information related to the sales promotion campaign in association with various pieces of information in the manufacturing stage, the distribution stage, and the consumption stage. In addition, it is easy to perform targeted sales promotion campaign.

As an aspect of the accommodating body according to the present invention, the individual identification information preferably includes first information attached in a form visible to a naked eye and second information attached using invisible ink, and in response to the first information being read by a predetermined information terminal, the first information preferably enables the information terminal to access the general information about the accommodating body identified by the first information, and in response to the second information being read by a predetermined information terminal, the second information preferably enables the information terminal to access the information for managers about the accommodating body identified by the second information.

According to this configuration, it is possible to provide the accommodating body itself with a lead for access to all the accommodating body information while making it difficult for general consumers or the like to know the presence of the information for managers.

Further features and advantages of the present invention will become more apparent from the following description of exemplary and non-limiting embodiments with reference to the drawings.

### Brief Description of Drawings

FIG. 1 is a perspective view of a beverage product according to a first embodiment.
FIG. 2 is a configuration diagram of a commodity management system according to the first embodiment.
FIG. 3 is a perspective view of a beverage product according to a modified example of the first embodiment.
FIG. 4 is a configuration diagram of a management system according to a second embodiment.

### Description of Embodiments

Hereinafter, embodiments of the present invention will be described. Note that an accommodating body that is a subject matter of the present invention refers to an article that includes a space capable of accommodating a content and that is used for the purpose of accommodating the content. Therefore, the accommodating body may be a portable container such as a bottle, a can, a PET bottle, a paper pack, a plastic container, a pouch container, a tray, a barrel, or a container, or may be a fixed container such as a tank, a silo, or a tub. As is apparent from the above examples, the material constituting the accommodating body is not limited, and may be plastic, glass, metal, wood, paper, or the like. Further, the volume of the accommodating body is not limited.

### First Embodiment

A first embodiment of the accommodating body according to the present invention will be described with reference to the drawings. Hereinafter, an example will be described in which the accommodating body according to the present invention is applied to a beverage product 1 (an example of the accommodating body) distributed in a state of being filled with a beverage.

### Configuration of Beverage Product

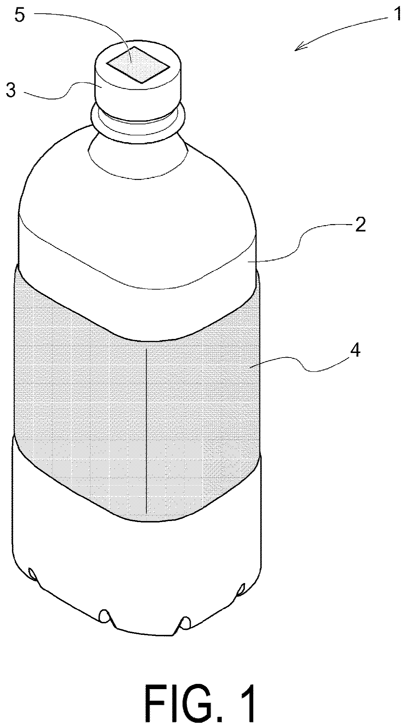

In an aspect of the beverage product 1 according to the present embodiment, a container including a container body 2 (an example of an accommodating portion) and a cap 3 is filled with a beverage (which is an example of the content and is not illustrated) (FIG. 1). That is, the beverage product 1 is a beverage product distributed in the market, and is intended to be shipped from a supplier (an example of a manager) of the beverage product and reach a consumer through distribution and retail.

In the present embodiment, the container body 2 is made of polyethylene terephthalate and is a colorless and transparent container. The container body 2 is obtained by biaxial stretch blow molding using a preform made of polyethylene terephthalate as a raw material. Note that the material constituting the container body 2 is not limited to polyethylene terephthalate and may be polyethylene or polypropylene, for example. In addition, the material may be derived from petroleum, a plant-derived raw material, a recycled raw material, or the like.

A label 4 is attached to the container body 2. FIG. 1 illustrates an example in which the label 4 is a roll label, but the label 4 is not limited to this example. For example, the label 4 may be a shrink label. Further, the label 4 does not need to be attached to the container body 2.

In the present embodiment, the cap 3 is made of polypropylene. The cap 3 is obtained by injection molding using polypropylene as a raw material. Note that the material constituting the cap 3 is not limited to polypropylene and may be polyethylene, for example. In addition, the material may be derived from petroleum, a plant-derived raw material, a recycled raw material, or the like.

A two-dimensional code 5 is printed on the top surface of the cap 3. In a commodity management system 10 (described below) managing the beverage products 1, the two-dimensional code 5 is associated with a unique ID (an example of individual identification information) for identifying each beverage product 1 to be managed. That is, the unique ID is attached to the top surface of the cap 3 in the form of the two-dimensional code 5. The unique ID is attached to each individual beverage product 1 on a one-to-one basis and is not duplicate.

As understood by taking the beverage product 1 according to the present embodiment as an example, the accommodating body of the present invention refers to an accommodating body that accommodates a content (a beverage in the present embodiment) serving as a core of added value of the product when the product is, for example, manufactured, distributed, and consumed and that enables the content to be handled at places of the manufacture, distribution, consumption, and the like. Therefore, the accommodating body of the present invention is a concept including not only an accommodating portion accommodating an article but also an attachment attached to the accommodating portion and used integrally. Examples of the attachment in the present embodiment include articles such as the cap 3 sealing the container body 2, a label, a tag, a sticker, or the like attached to the container body 2, the cap 3, or the like, and a decorative box accommodating the container body 2 sealed by the cap 3. Note that the accommodating body according to the present invention may or may not accommodate a content.

### Configuration of Commodity Management System

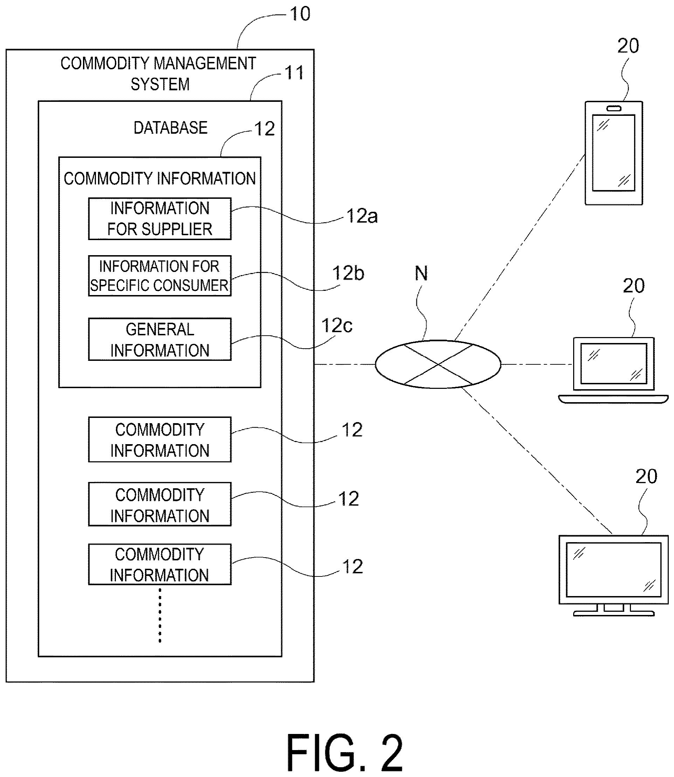

The commodity management system 10 (an example of a management system) (FIG. 2) according to the present embodiment is a system accessible by a supplier, a distributor, a retailer, and a consumer involved in the beverage product 1, as well as other persons, and various types of information related to the beverage product 1 are centrally managed in the system. In the commodity management system 10, information related to each beverage product 1 is held as a relational database 11 (hereinafter, simply referred to as a database 11) having a unique ID assigned to each beverage product 1 as a main key. As described above, the unique ID of each beverage product 1 is printed on the top surface of the cap 3 of the beverage product 1 as the two-dimensional code 5.

The commodity management system 10 holds, in the database 11, commodity information 12 (an example of accommodating body information) for each beverage product 1 to be managed. The commodity information 12 includes information for suppliers 12a (an example of the information for managers) accessible only by the supplier of the beverage product 1, information for specific consumers 12b accessible only by a consumer satisfying a specific condition, and general information 12c accessible by all users. Note that the hardware configuration of the commodity management system 10 can typically be a general server-type computer, but is not limited as long as functions described below can be implemented.

The information for suppliers 12a is information internally used by the supplier of the beverage product 1 and is, for example, information related to production, information related to distribution, or the like. Access to the information for suppliers 12a is limited only to the supplier, i.e., the employees of the supplier and related persons equivalent thereto (such as persons related to logistics).

Examples of the information for suppliers 12a include information for identifying the content of the beverage product 1 (product name, ingredient name, recipe name, manufacturing date, best-before date, expiration date, etc.), information for identifying the manufacturing place of the beverage product 1 (factory name, manufacturing line name, manufacturing lot number, manufacturing operator name, etc.), information for identifying the raw material of the beverage product 1 (raw material name, raw material supplier name, raw material lot number, raw material reception date, etc.), information for identifying the manufacturing condition of the beverage product 1 (pressure during the manufacture, temperature during the manufacture, filling head number, passing time, etc.), information for identifying the quality of the beverage product 1 (inspection value, inspection image, inspector name, etc.), and information for identifying the distribution status of the beverage product 1 (reception and payment places, reception and payment timings, vehicle number, pallet number, etc.).

The information for specific consumers 12b is information accessible by the consumer who satisfies the specific condition. For example, a unique user ID may be assigned to each consumer, the user ID of a customer who has purchased each beverage product 1 may be associated with the unique ID of the beverage product 1, and the customer may be able to check the purchase date, purchase place, and the like of only the beverage product 1 associated with the user ID of the customer. In this case, the supplier can know the purchase history of each consumer.

In addition, for example, a condition related to a route for acquiring the beverage product 1 (region, time, retail store, etc.) is set, and sales promotion campaign information accessible by the consumer who satisfies the condition is provided. Thus, it is possible to conduct a sales promotion campaign in which targeting limited to a region, time, retail store, or the like is performed. In this case, the limitedly provided sales promotion campaign information is an example of the information for specific consumers 12b.

Further, part of the information described above as an example of the information for suppliers 12a can be made accessible only for the beverage product 1 purchased by the consumer. The purchase history and the accessible part of the information for suppliers 12a in these examples are examples of the information for specific consumers 12b. For example, when an inquiry about the quality or the like of the beverage product 1 is made from the consumer to the supplier, the specific consumer may be permitted to access some or all of respective pieces of information for identifying the raw material, the manufacturing condition, and the quality of the beverage product 1 that is an inquiry target to help explain that the beverage product 1 has been manufactured normally. In this case, the supplier is only required to set the association between the user ID and the unique ID of the beverage product 1 for which the consumer having the user ID is permitted to access the information.

That is, examples of the information for specific consumers 12b include the information related to the purchase history of the beverage product 1 purchased by the specific consumer, the sales promotion campaign information targeted for the consumer who satisfies the specific condition, and the part of the information for suppliers 12a exclusively disclosed to the specific consumer.

The general information 12c is information accessible by all users, and examples thereof include a website introducing the beverage product 1 and information related to a sales promotion campaign having no limiting condition. Part of the information described above as an example of the information for suppliers 12a may be handled as the general information 12c. The example of the information for suppliers 12a includes the information for identifying the content of the beverage product 1 (product name, ingredient name, recipe name, manufacturing date, best-before date, expiration date, etc.), the information for identifying the manufacturing place of the beverage product 1 (factory name, manufacturing line name, manufacturing lot number, manufacturing operator name, etc.), the information for identifying the raw material of the beverage product 1 (raw material name, raw material supplier name, raw material lot number, raw material reception date, etc.), the information for identifying the manufacturing condition of the beverage product 1 (pressure during the manufacture, temperature during the manufacture, filling head number, passing time, etc.), the information for identifying the quality of the beverage product 1 (inspection value, inspection image, inspector name, etc.), and the information for identifying the distribution status of the beverage product 1 (reception and payment places, reception and payment timings, vehicle number, pallet number, etc.). For example, the raw material name, the best-before date, and the factory name are pieces of information conventionally open to all users in the form of being printed on the label 4. Thus, there is no problem handling such information as the general information 12c.

Note that each of the information for suppliers 12a, the information for specific consumers 12b, and the general information 12c may be stored directly or indirectly in the database 11. For example, a configuration in which, instead of storing the information related to the sales promotion campaign itself in the database 11, the URL of a website on which the information is posted is stored in the database 11 and a user who accesses the database 11 can connect to the URL is an example in which the general information 12c is indirectly stored in the database 11.

According to the above-described configuration of the commodity information 12, the information in the manufacturing stage, the distribution stage, and the consumption stage of each beverage product 1 can be centrally managed in association with the unique ID of the beverage product 1. Further, since the unique ID is attached to the beverage product 1 in the form of the two-dimensional code 5, it is easy to access each piece of the information.

When the two-dimensional code 5 is read by a predetermined information terminal 20 (such as a smartphone, a tablet terminal, and a dedicated terminal), the information terminal 20 can access the database 11 via an Internet N. Among pieces of the commodity information 12 held in the database 11, the commodity information 12 about the beverage product 1 identified by the unique ID associated with the read two-dimensional code 5 is accessible at this time.

Here, a range of the commodity information 12 permitted to be accessed by the information terminal 20 is limited based on the user of the information terminal 20. Here, a method for determining, by the commodity management system 10, the authority of each user is not limited. For example, in an aspect, authentication based on the user ID of the user is requested when the user accesses the commodity management system 10, and access to the commodity information 12 is permitted in a range corresponding to the authority of the user identified by the user ID. In addition, access to the information for suppliers 12a may be permitted only when the two-dimensional code 5 is read through a dedicated application permitted to be used only by users on the manager side (employees of the manager and related persons equivalent thereto), and access to the information for specific consumers 12b and the general information 12c may be permitted when access is made through a general-purpose application (such as a standard two-dimensional code reader).

### Modified Example

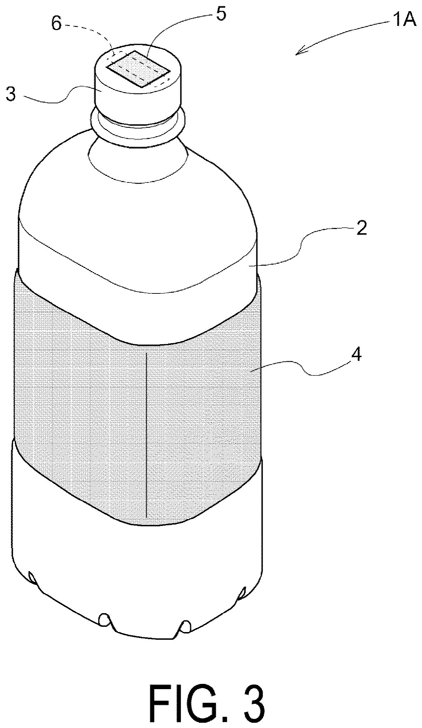

A beverage product 1A according to a modified example (FIG. 3) is different from that of the above embodiment in that invisible print 6 is provided at the top surface of the cap 3 in addition to the two-dimensional code 5. The invisible print 6 is attached using invisible ink and is not visible to the naked eye. The invisible ink contains a component emitting light when irradiated with ultraviolet light having a predetermined wavelength, and the invisible print 6 can be read only when irradiated with ultraviolet light having the wavelength.

In this modified example, both the two-dimensional code 5 and the invisible print 6 enable access to the database 11 when read by the information terminal 20. Further, the two-dimensional code 5 and the invisible print 6 attached to the same beverage product 1A are associated with the same unique ID. However, in this modified example, first information indicated by the two-dimensional code 5 and second information indicated by the invisible print 6 are different.

When the two-dimensional code 5 is read by the information terminal 20, access to the information for specific consumers 12b and the general information 12c is permitted. On the other hand, when the invisible print 6 is read by the information terminal 20, access to the information for suppliers 12a is permitted. Note that, in the latter case, the information terminal 20 needs to include a light-emitting device emitting ultraviolet light making the invisible ink visible.

In the modified example, since the information for suppliers 12a is not visible to the naked eye, a person other than those who originally know the presence of the information for suppliers 12a (typically, the employees of the supplier or the like) is less likely to notice that the information for suppliers 12a is attached. This makes it possible to provide the beverage product 1A itself with a lead for access to all the commodity information 12 while making it difficult for general consumers or the like to know the presence of the information for suppliers 12a.

### Second Embodiment

A second embodiment of the accommodating body according to the present invention will be described with reference to the drawings. Hereinafter, an example will be described in which the accommodating body according to the present invention is applied to a storage container in which stored liquor is stored and a tank filled with stored liquor in a manufacturing plant of stored liquor.

### Configurations of Storage Container and Tank

Each of the storage container and the tank is an example of the accommodating body. The storage container is intended to accommodate stored liquor, and the tank is a device including an accommodating portion temporarily accommodating stored liquor to be filled.

In the present embodiment, a two-dimensional code 5 associated with a unique ID is attached to the top surface of the storage container and each side surface of the tank. The mode of the two-dimensional code 5 is the same as that of the first embodiment. Note that invisible print 6 may be attached together with the two-dimensional code 5. The invisible print 6 in this case is the same as that in the modified example of the first embodiment.

Note that facilities other than the storage container and the tank used in the manufacturing plant may also be management targets, and the two-dimensional code 5 or the like can be attached to each facility to be managed. For the sake of simplicity, the storage container and the tank will be described as examples.

### Configuration of Management System

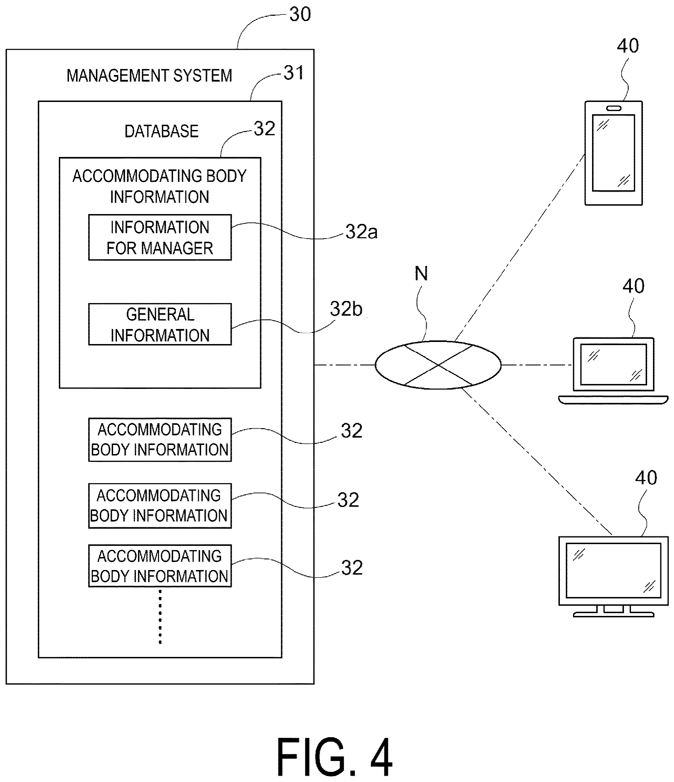

A management system 30 (FIG. 4) according to the present embodiment is a system accessible by a manufacturer (an example of the manager) involved in manufacture of stored liquor and other persons, and various types of information related to the stored liquor are centrally managed in the system. In the management system 30, information related to each of the storage container and the tank is held as a relational database 31 (hereinafter, simply referred to as a database 31) using a unique ID assigned to each of the storage container and the tank as a main key. The unique IDs of the storage container and the tank are printed as the two-dimensional codes 5 on the top surface of the storage container and the side surfaces of the tank.

The management system 30 holds, in the database 31, accommodating body information 32 for each of the storage container and the tank to be managed. The accommodating body information 32 includes information for managers 32a accessible only by the manufacturer of the stored liquor and general information 32b accessible by all users. Note that the hardware configuration of the management system 30 can typically be a general server-type computer, but is not limited as long as functions described below can be implemented.

The information for managers 32a is information internally used by the manufacturer of the stored liquor, and examples thereof include information related to a factory name, a manufacturing line name, a manufacturing operator name, and a quality inspection result. Access to the information for managers 32a is limited to the employees of the manufacturer and the like.

The general information 32b is information accessible by all users including those other than the employees of the manufacturer or the like, and is particularly information used for providing information in the manufacturing plant. For example, as the general information 32b regarding the storage container, information related to the storage container or the tank (material, manufacturing year, etc.), information related to the stored liquor accommodated in the storage container or the tank (production region, type, etc. of the raw material), and the like are handled as the general information 32b.

When the two-dimensional code 5 is read by a predetermined information terminal 40 (such as a smartphone, a tablet terminal, or a dedicated terminal), the information terminal 40 can access the database 31 via the Internet N. Among pieces of the accommodating body information 32 held in the database 31, the accommodating body information 32 about the accommodating body identified by the unique ID associated with the read two-dimensional code 5 is accessible at this time.

A range of the accommodating body information 32 permitted to be accessed by the information terminal 40 is limited in the same manner as in the first embodiment. That is, it is possible to use a method of requesting user authentication, a method in which the manager and persons other than the manager use different applications, a method in which access destinations are different between the two-dimensional code 5 and the invisible print 6, and the like.

### Other Embodiments

Finally, other embodiments of the accommodating body according to the present invention will be described. Note that the configuration described in each of the following embodiments can also be applied in combination with the configuration described in another embodiment as long as no contradiction arises.

In the above embodiments, a configuration in which the unique ID is attached as the two-dimensional code 5 to the cap 3 of the beverage product 1, the top surface of the storage container, or the side surfaces of the tank has been described as an example. However, in the accommodating body according to the present invention, where the individual identification information is attached is not limited. That is, the individual identification information may be attached to the main body of the accommodating body accommodating the content, or the individual identification information may be attached to the attachment attached to the main body of the accommodating body. In addition, whether or not the accommodating body according to the present invention accommodates the content is also not limited.

In the above embodiments, the configuration has been described as an example in which the information for suppliers 12a includes the information for identifying the content of the beverage product 1, the information for identifying the manufacturing place of the beverage product 1, the information for identifying the raw material of the beverage product 1, the information for identifying the manufacturing condition of the beverage product 1, the information for identifying the quality of the beverage product 1, and the information for identifying the distribution status of the beverage product 1. However, information included in the information for managers in the present invention is not limited to the above examples.

In the above embodiments, examples of the information for specific consumers 12b include the information related to the purchase history of the beverage product 1 purchased by the specific consumer, the sales promotion campaign information targeted for the consumer who satisfies the specific condition, and the part of the information for suppliers 12a exclusively disclosed to the specific consumer. However, information included in the information for specific consumers in the present invention is not limited to the above examples.

In the above embodiments, as examples of the general information 12c, the website introducing the beverage product 1, the information related to the sales promotion campaign having no limiting condition, and the like have been described. However, information included in the general information in the present invention is not limited to the above examples.

Also, with respect to other configurations, it should be understood that the embodiments described in the present specification are illustrative in all respects and that the scope of the present invention is not limited thereto. It will be easily understood by those skilled in the art that appropriate modifications can be made without departing from the spirit of the present invention. Accordingly, other embodiments modified without departing from the spirit of the present invention are naturally included in the scope of the present invention.

### Industrial Applicability

The present invention is applicable to a container and a manufacturing facility of a beverage product or the like, for example.

### Reference Signs List

### First Embodiment

1: Beverage product
2: Container body
3: Cap
4: Label
5: Two-dimensional code
6: Invisible print
10: Commodity management system
11: Database
12: Commodity information
12a: Information for supplier
12b: Information for specific consumer
12c: General information
20: Information terminal

### Second Embodiment

30: Management system
31: Database
32: Accommodating body information
32a: Information for manager
32b: General information
40: Information terminal

## Claims

1. An accommodating body to which individual identification information in a management system is attached, the accommodating body including an accommodating portion for accommodating a content, wherein
the management system holds accommodating body information individually for accommodating bodies to be managed, the accommodating body information including information for managers accessible only by a manager of the accommodating bodies and general information accessible by all users, and
in response to the individual identification information being read by a predetermined information terminal, the individual identification information enables the information terminal to access the accommodating body information about the accommodating body identified by the individual identification information, and, in response to this, a range of the accommodating body information permitted to be accessed by the information terminal is limited based on a predetermined condition.

2. The accommodating body according to claim 1, wherein
the information for managers includes at least one of information for identifying the content, information for identifying a manufacturing place of the content, information for identifying a raw material of the content, information for identifying a manufacturing condition of the content, information for identifying a quality of the content, and information for identifying a distribution status.

3. The accommodating body according to claim 1, wherein
the accommodating body information further includes information for specific consumers accessible by a consumer satisfying a specific condition.

4. The accommodating body according to claim 1, wherein
the general information includes at least one of information related to a sales promotion campaign, information for identifying the content, information for identifying a manufacturing place of the content, information for identifying a raw material of the content, information for identifying a manufacturing condition of the content, information for identifying a quality of the content, and information for identifying a distribution status.

5. The accommodating body according to any one of claims 1 to 4, wherein
the individual identification information includes first information attached in a form visible to a naked eye and second information attached using invisible ink,
in response to the first information being read by a predetermined information terminal, the first information enables the information terminal to access the general information about the accommodating body identified by the first information, and
in response to the second information being read by a predetermined information terminal, the second information enables the information terminal to access the information for managers about the accommodating body identified by the second information.

6. An access restriction method for restricting access to accommodating body information in a management system that manages an accommodating body including an accommodating portion for accommodating a content, and that holds the accommodating body information individually for accommodating bodies to be managed, the accommodating body information including information for managers accessible only by a manager of the accommodating bodies and general information accessible by all users, the access restriction method comprising:
in response to individual identification information attached to the accommodating body being read by a predetermined information terminal, causing the information terminal to access the accommodating body information about the accommodating body identified by the individual identification information; and
limiting a range of the accommodating body information permitted to be accessed by the information terminal based on a predetermined condition.
